(19) Europäisches Patentamt / European Patent Office / Office européen des brevets

(11) **EP 4 372 375 A1**

(12) **EUROPEAN PATENT APPLICATION**

(43) Date of publication:
**22.05.2024  Bulletin 2024/21**

(21) Application number: **23192131.3**

(22) Date of filing: **18.08.2023**

(51) International Patent Classification (IPC):
***G01N 30/86*** *(2006.01)*

(52) Cooperative Patent Classification (CPC):
**G01N 30/8665**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.11.2022  JP 2022182826**

(71) Applicant: **Hitachi High-Tech Science Corporation**
**Minato-ku**
**Tokyo 105-6411 (JP)**

(72) Inventors:
• **FUKUDA, Masato**
**Minato-ku Tokyo, 105-6411 (JP)**

• **ITO, Masahito**
**Minato ku Tokyo, 105-6411 (JP)**
• **MORIKAWA, Satoru**
**Minato ku Tokyo, 105-641 (JP)**
• **MATSUSHITA, Miyuki**
**Minato ku Tokyo, 105-6411 (JP)**
• **HASHIMOTO, Makoto**
**Minato ku Tokyo, 105-6411 (JP)**

(74) Representative: **Stöckeler, Ferdinand**
**Schoppe, Zimmermann, Stöckeler**
**Zinkler, Schenk & Partner mbB**
**Patentanwälte**
**Radlkoferstrasse 2**
**81373 München (DE)**

(54) **LIQUID CHROMATOGRAPHIC APPARATUS**

(57)    A known sample can be quantified without requiring preparation of a standard sample for an analyte. Disclosed is a liquid chromatographic apparatus 100 for quantifying a measurement target substance. The liquid chromatographic apparatus 100 includes a controller 9 and an operation display unit 10 that accepts user operations and displays information. The operation display unit 10 receives designation of a measurement target substance and a standard substance that are different substances. The controller 9 quantifies the measurement target substance based on the substance amount of the target substance, a detection response ratio based on detection results of the measurement target substance and the standard substance, and an RMS coefficient, which is a ratio of a response ratio of the measurement target substance and the standard substance with respect to a substance amount ratio of the measurement target substance and the standard substance.

FIG. 1

## EP 4 372 375 A1

**Description**

BACKGROUND OF THE DISCLOSURE

Field of the Disclosure

The present disclosure relates to a chromatographic apparatus for quantifying a measurement target contained in an unknown sample.

Description of the Related Art

The absolute calibration curve method and the internal standard method are known as conventional quantitative analytic methods of chromatography such as liquid chromatography. For example, in the internal standard method, samples each containing a measurement target substance of a known concentration and an (internal) standard substance of a predetermined concentration are analyzed. In this case, the concentration of the measurement target substance varies from sample to sample. Then, a calibration curve expressing a relationship between the concentration of the measurement target substance and the intensity ratio of the measurement target substance and the internal standard substance, as a linear equation, is obtained. Next, an unknown sample is quantified using the calibration curve (see, Patent Document 1) .

[Document of Related Art]

Patent Document

[Patent Document 1] Japanese Patent No. 6152301

SUMMARY OF THE DISCLOSURE

To create a calibration curve as described above, a standard sample for an analyte was required for each time. In this regard, the same is true for the absolute calibration method.
The present disclosure has been made in view of the problem occurring in the related art, and aims to enable quantification of an unknown sample without requiring a standard sample for an analyte.
To achieve the above objective, the present disclosure provides a liquid chromatographic apparatus quantifying a predetermined measurement target substance, the system including a controller and an operation display unit that receives user operations and performs display,

in which the operation display unit receives a designation of a measurement target substance and a designation of a predetermined standard substance different from the measurement target substance, and
the controller quantifies the measurement target substance based on the substance amount of the standard substance, a detection response ratio based on detection results of the measurement target substance and the standard substance, and an RMS coefficient, which is a ratio of a response ratio $R_r$ of the measurement target substance and the standard substance with respect to a substance amount ratio $R_n$ of the measurement target substance and the standard substance.

Since the system quantifies the measurement target substance on the basis of the RMS coefficient, the substance amount of the standard substance, and the detection results of the measurement target substance and the standard substance, it is possible to quantify an unknown sample without requiring a standard sample of an analyte.
The present disclosure enables quantification of unknown samples without requiring a standard sample of an analyte.

BRIEF DESCRIPTION OF THE DRAWINGS

FIG. 1 is a block diagram illustrating a schematic construction of a liquid chromatographic apparatus.
FIG. 2 is a diagram illustrating an example of an input screen used to enter a substance amount ratio.
FIG. 3 is a diagram illustrating an exemplary display screen with which a measurement target substance and a standard substance can be designated.

FIG. 4 is a diagram illustrating another exemplary display screen with which a measurement target substance and a standard substance can be designated.

FIG. 5 is a diagram illustrating a further exemplary display screen with which a measurement target substance and a standard substance can be designated.

FIG. 6 is a diagram illustrating a yet further exemplary display screen with which a measurement target substance and a standard substance can be designated.

FIG. 7 is a diagram illustrating a still yet further exemplary display screen with which a measurement target substance and a standard substance can be designated.

DETAILED DESCRIPTION OF THE DISCLOSURE

Hereinafter, embodiments of the present disclosure will be described in detail with reference to the accompanying drawings.

(Schematic construction of liquid chromatographic apparatus)

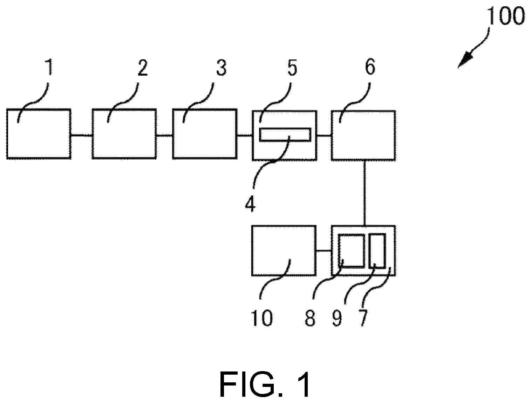

A liquid chromatographic apparatus 100 quantifies a measurement target substance. Referring to FIG. 1, the liquid chromatographic apparatus 100 includes a data processing device 7 that controls the overall operation of the system, a mobile phase (eluent or a mixed solution that is a mixture with a solvent, etc.) 1, a pump 2 that pumps the mobile phase 1, an autosampler 3 for injecting a sample, a column 4 that separates components, a column oven 5 that maintains the column 4 at a predetermined temperature, a detector 6 that detects the separated components, and an operation display unit 10.

The data processing device 7 is implemented with a computer equipped with: a controller 9 (for example, CPU, etc.) that executes analysis and interprets analysis results; and a memory unit 8 (hard disk, etc.) that stores the analysis results, interpretation results, and calibration curve information, and conversion information (RMS coefficients, etc.) described below. The operation display unit 10 receives various operational inputs, etc., and displays analysis results and interpretation results, etc.

The detector 6 is composed of multiple elements that detect signal intensity. The detector 6 may be a three-dimensional detector that can simultaneously acquire signal intensity over time at multiple wavelengths. Alternatively, the detector 6 is an absorbance detector, a fluorescence detector, a mass detector, etc.

A sample is injected from an injector (not shown) of the autosampler 3. The sample then passes through the column 4 along with the mobile phase 1 pumped by the pump 2 and separates into various components.

The components resulting from the separation of the sample are detected by the detector 6. The signals output from the detector 6 are sent to the data processing device 7 and are subjected to data processing.

The column 4 serves as a separator that is generally used to separate components of a sample existing in a mobile phase 1. The column 4 may be a packed column or a monolithic column. Various types of column packing materials, including adsorption, distribution, and ion-exchange types, can be used for the column 4. It is desirable that the column 4 is installed in the column oven 5 so that the column 4 can be maintained at a predetermined temperature, and the components of the sample can be separated with high reproducibility.

(Quantification method)

As shown in Table 1 below, the liquid chromatographic apparatus 100 can perform quantification not only using the conventional absolute calibration curve method and the conventional internal standard method and but also using a relative molar sensitivity (RMS) coefficient, which is defined as the ratio of the response ratio Rr of a measurement target substance and a standard substance to the substance amount ratio Rn (in addition to the substance amount ratio in a narrow sense, there may be mass ratio, volume ratio, concentration ratio, etc.) as shown below (as represented by Equation 1).

[Table 1]

| Quantification method | Substance contained in unknown sample | | Substance for calibration attributable to daily fluctuation (for example, measurement once a day) | |
|---|---|---|---|---|
| | Measurement target substance (unknown amount) | Reference substance (known amount) | Measurement target substance (known amount) | Reference substance (known amount) |
| Absolute calibration curve method | O | X | O (External standard substance) | X |
| Internal standard method | O | O (Internal standard substance) | O | O (Internal standard substance) |
| Quantification using external standard substance, employing RMS coefficient | O | X | X (b) | O (a) (External standard substance) |
| Quantification using internal standard substance, employing RMS coefficient | O | O (e) (Internal standard substance) | X (d) | X (c) |

[Equation 1]

$$RMS = \frac{R_r}{R_n} = \frac{\left(\dfrac{A_{anal}}{A_{ref}}\right)}{\left(\dfrac{n_{anal}}{n_{ref}}\right)}$$

Here, the subscript "anal" represents a measurement target substance (analyte), and the subscript "ref" represents a standard substance (reference). A represents the peak area or peak height as the amount of response (hereinafter, simply referred to as response amount), and n is the amount of substance (for example, mol) (hereinafter, simply referred to as substance amount), for each of the measurement target substance anal and the standard substance ref. As expressed by Equation 1, to calculate the RMS coefficient, a sample solution containing a measurement target substance of a known substance amount and a standard substance of a known substance amount is injected into a high performance liquid chromatography (HPLC), and the resulting peak areas are input as the response amounts of the measurement target and standard substances.

(Quantification using external standard and RMS coefficient)

For example, when the response amount $A_{ref}$ and substance amount $n_{ref}$ of glycine which serves as a standard substance (external standard substance) marked with (a) in Table 1 are obtained by measurement, for example, once every morning, and the response amounts Aanal of alanine (RMS coefficient = 1.74), glutamic acid (RMS coefficient = 1.87), and aspartic acid (RMS coefficient = 2.02) as measurement target substances are measured, the substance amounts $n_{anal}$ of the respective measurement target substances can be obtained by Equation 1 below. Therefore, when the measurement is performed on the external standard substance marked with (a) in Table 1, a measurement target substance marked with (b) in Table 1 can be quantified without performing actual measurement of the measurement target substance.

[Equation 2]

$$n_{anal} = (A_{anal}/A_{ref}) \cdot n_{ref}/RMS$$

(Quantification using internal standard and RMS coefficient)

In the case of using an internal standard, as marked with (e) in Table 1, when a standard substance (internal standard substance) of a known amount contained in an unknown sample is measured to determine the response amount $A_{ref}$ of the standard substance and the response amount $A_{anal}$ of the measurement target substance, the substance amount $n_{anal}$ of the measurement target substance can be obtained as shown by Equation 1. Therefore, the measurement target substance can be quantified without having to perform measurements for calibration attributable to daily fluctuations as marked with (c) and (d) in Table 1, on the measurement target substance and the standard substance.

As described above, the RMS method is a quantitative analysis method that uses RMS coefficients. Since known RMS coefficients can be regarded as constants, the substance amount ratio $R_n$ can be obtained by inputting the measured response ratio $R_r$ into Equation 1. Since the substance amount $n_{ref}$ of the standard substance is given, the substance amount $n_{anal}$ of each measurement target substance can be obtained. The RMS method is positioned, for convenience, as a reliable quantitative analysis method based on the substance amount, rather than a relative method.

The substance amount (mol), which is a value obtained by the quantification, can be converted to mass (g) using a molecular weight. When a sample injection amount represented in volume, like 10 $\mu$L, is input, the sample volume can be converted to a concentration such as mol/L or g/L. Specifically, for example, the memory unit 8 may store conversion coefficients for converting quantification results into specified units of concentration, and the operation display unit 10 may receive an operational input of designating the unit of concentration and convert a quantification result into the specified unit of concentration for outputting.

(Inputting substance amount ratio)

To obtain a RMS coefficient, the substance amount ratio, which is the ratio of the amount of the measurement target substance to the amount of the standard substance, needs to be input, as can be seen from Equation 1. Here, although not limited, quantitative $^1$H-NMR (qNMR: Quantitative Nuclear Magnetic Resonance) is useful to measure accurate substance amount ratios. The advantage of qNMR is that it is possible to determine the amount of substances or the amount ratio of substances contained in a sample solution without requiring to the purity or mass (weight) to be known. The substance amount (mol) is directly determined by dividing the qNMR signal value (signal area) by the number of protons.

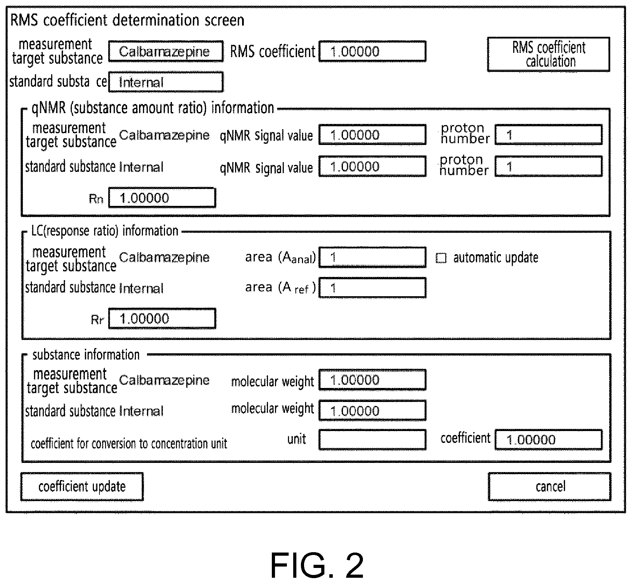

FIG. 2 is a diagram illustrating an example of an input screen. This screen is a dialog box for the use of the RMS method.

In the case where SI-traceable reference materials such as certified reference materials (CRMs) for a measurement target substance anal and a standard substance ref are available, the substance amount of the measurement target substance anal and the substance amount of the standard substance ref can be obtained even without using qNMR. The controller can calculate the ratio of the amounts as a substance amount ratio.

In other words, an input screen for entering qNMR-related variables (qNMR signal value, proton count. etc.) for each of the measurement target substance and the standard substance, or entering an indication value of the amount of each substance may be displayed on the operation display unit 10. Then, a substance amount ratio of the measurement target substance and the standard substance is calculated on the basis of the entered qNMR-related variables (or indication values of the substance amounts), and an RMS coefficient can be calculated on the basis of the produced substance amount ratio.

When calculating the RMS coefficient, it is desirable that the substance amount of the measurement target substance anal and the substance amount of the standard substance ref is SI-traceable. That is, the substance amounts have uncertainty. How to handle this uncertainty will be described below.

(Acquisition of response ratio)

To obtain the RMS coefficient, a sample solution for which the substance amount ratio has been entered through the input screen is actually injected, and the peak area of each of the measurement target substance anal and the standard substance ref is actually measured by HPLC in a manner described above and then a response ration can be calculated. The average peak area value for n times of injection may be adopted. The standard deviation of the peak area may be entered as a degree of uncertainty indicating variability.

(Direct input of RMS coefficient)

RMS coefficients as constants used for quantitative calculation may be directly entered as predetermined values through the input screen, without actual measurements such as qNMR or HPLC. In the case of using a direct input function, the user needs to understand the reliability of quantitative calculation results to some extent in advance, in terms of various factors that cause uncertainty.

By actual measurements or direct inputting, measurement target substances, standard substances, and RMS coefficients are mapped, and combinations thereof are recorded. In this way, the contents of a database may be updated. This database may be preserved in the memory unit 8. Alternatively, the entire database or a portion of the database may be acquired from the outside of the data processing device 7 by network communication or other means as needed.

(Example of operation and display of liquid chromatographic apparatus 100)

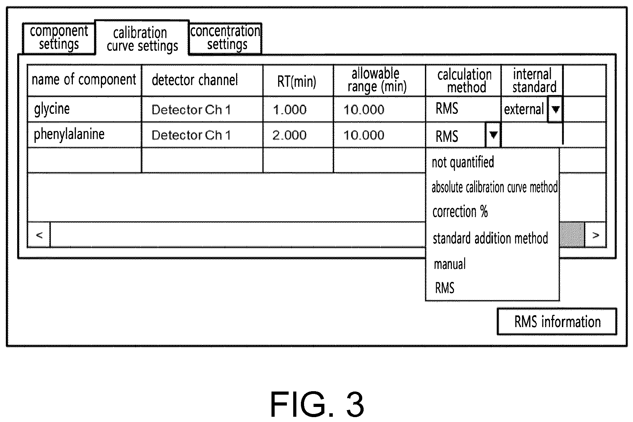

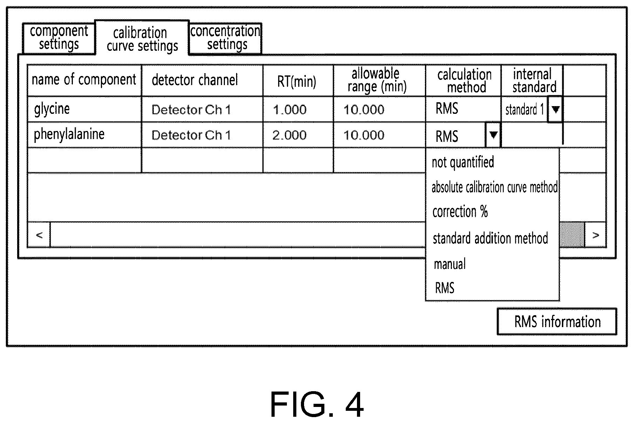

Generation of calibration curves and quantification of measurement target substances are performed, for example, with the use of the operation display unit 10 as shown in FIGS. 3 and 4. In other words, substances are set by entering the names of the substances into a "Component name" box or selecting the names of the substances from a pull-down menu in a measurement condition display screen shown in FIGS. 3 and 4, and one of the absolute calibration curve method, the internal standard method (standard addition method), and the calculation method employing RMS coefficients is selected from a pull-down menu or directly entered into a "Calculation method" box. An "internal standard" box is used to designate each substance as a standard substance or a measurement target substance. In this way, the measurement target substance and the standard substance are designated, and the quantification method is set. That is, in the case of using the quantification method employing RMS coefficients, when the item "external" is selected as shown in FIG. 3, the substance is referenced as a standard substance to create a calibration curve, but is not added to a sample as an internal standard. In addition, the selection of "Standard 1" as shown in FIG. 4 indicates that the substance is added as an internal standard to a sample. The name in the "internal standard" box, is also used to indicate, for convenience only, whether or not the substance is used as an internal standard in the case where the internal standard method is used. Alternatively, a separate box or screen to set whether a substance is used as a standard substance (reference substance) or not.

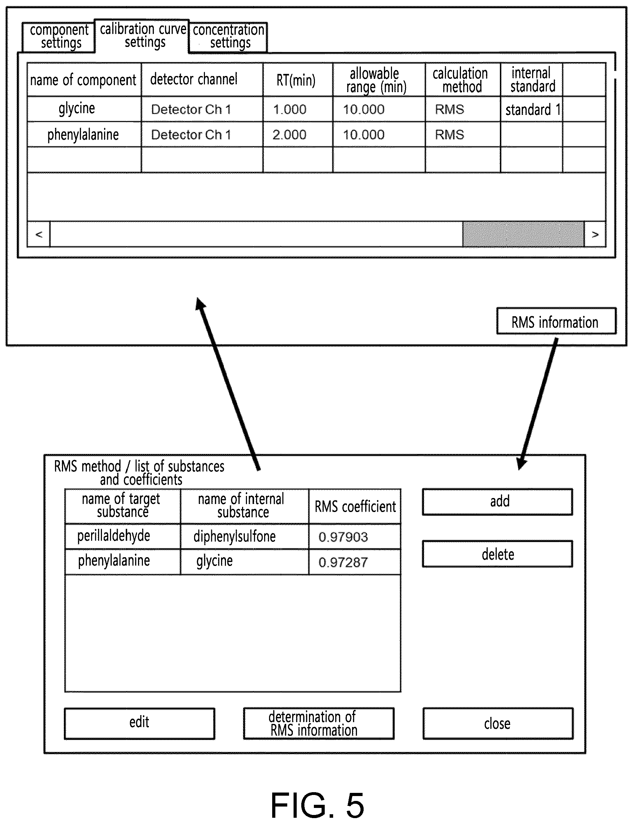

In addition, as shown in FIGS. 5, for example, in an "RMS Method Substance/Coefficient List" window, a combination of a measurement target substance and a standard substance, such as "Target substance name: phenylalanine; internal standard substance name: glycine," may be displayed on the basis of a separately established database and selected so that the contents of the "Component Name" and "Internal Standard" boxes in the measurement condition display screen can be automatically entered. In this case, when the RMS coefficients are also retained in such a database, the RMS coefficients can also be automatically entered. When one or more measurement target substances are entered via the measurement condition display screen in advance, the standard substances which is displayed using the "RMS Method Substance/Coefficient List" window can be filtered.

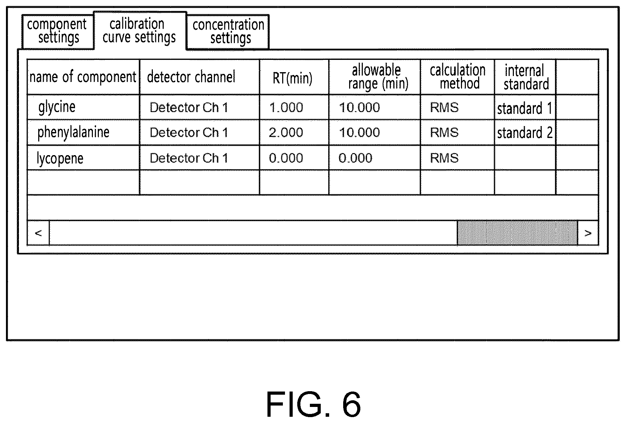

In addition, for example, as shown in FIG. 6, multiple standard substances can be set. In this case, the concentrations obtained using the RMS coefficients can be averaged, or information with a spread can be obtained. This increases the accuracy and reliability of the quantification results.

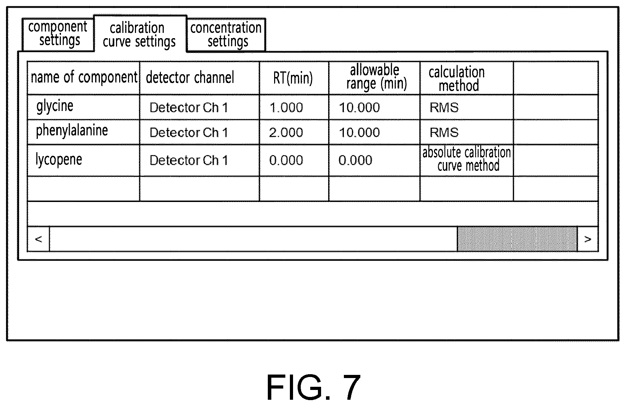

In addition, for example, as shown in FIG. 7, the RMS coefficient-involved quantification method and the absolute calibration curve method are selectively used depending on the measurement target substances.

As described above, after the measurement target substance and the standard substance are designated, the measurement target substance is quantified on the basis of the substance amount of the standard substance, a detection response ratio based on detection results of the measurement target substance and the standard substance, and an RMS coefficient, which is a ratio of a response ratio $R_r$ of the measurement target substance and the standard substance to a substance amount ratio $R_n$ of the measurement target substance and the standard substance. Thereby, it can be easily operated without requiring a standard sample of an analyte and without the user being aware of the coefficients between the target analyte and the reference substance, etc.

(Routine quantitative analysis based on RMS method)

In routine quantitative analysis, the RMS coefficient is treated like a given constant. The response ratio $R_r$ of an unknown sample is measured daily by high performance liquid chromatography (HPLC). By using the RMS coefficients, the substance amount ratio $R_n$ is first obtained by calculation according to Equation 1. Whether it is the peak of an internal standard substance added to an unknown sample or the peak of an external standard substance measured through an additional injection, since the substance amount $n_{ref}$ of the standard substance ref is known, the quantitative

value $n_{anal}$ can be obtained.

($\lambda_{max}$ method)

When the response ratio Rr is obtained by HPLC using an ultraviolet/visible light absorbance detector, the detection wavelengths for the standard substance ref and the measurement target substance anal do not necessarily have to be identical. For example, it is desirable that the absorption maximum wavelength $\lambda_{max}$, which indicates the maximum absorbance, be used for each of the standard substance ref and the measurement target substance anal. The method using the absorption maximum wavelength $\lambda_{max}$ is called the $\lambda_{max}$ method. As shown in Equation 1, the response ratio of the RMS coefficient is calculated on the basis of the peak areas obtained by designating the wavelength to $\lambda_{max}$ for each of the standard substance ref and the measurement target substance anal. In daily quantitative analysis, each sample is measured at the specified $\lambda_{max}$.

When an internal standard substance is added to an unknown sample, the ultraviolet/visible light absorbance detector mechanically switches the wavelengths of incident light at the meddle point in the period of time for which each of the standard substance ref and the measurement target substance anal is eluted in a maximum rate. Each peak is displayed on the same chromatogram and the response ratio can be obtained by measuring each peak area. Instead of mechanistic wavelength switching, a method in which a white incident light ray passes through a flow cell and then spectrally splits, and the absorbance thereof is measured by multiple sensing elements may be used.

A diode array detector (DAD) can be used to easily determine the response ratio using the $\lambda$max method because the peaks of the standard substance ref and the measurement target substance anal can be individually displayed on a three-dimensional chromatogram or contour diagram.

In the case of the external standard method, samples respectively containing the standard substance and the measurement target substance can be separately injected, making it easy to set the $\lambda_{max}$ for each substance by simply switching detection conditions each time the same is measured.

Likewise, in the case of using a detector that performs detection based on mass or fluorescence, m/z or excitation/fluorescence wavelengths, which are setting variables for detection, may be differentiated for the measurement target substance and the standard substance.

(Handling of uncertainty (variability))

As described above, when SI-traceable reference materials are available, the respective substance amounts (mol) of the standard substance and the measurement target substance may be entered as numerical values to obtain the substance amount ratio $R_n$. In addition to the indication value, the reference material is also marked with a degree of uncertainty indicating variability. When the user inputs a degree of uncertainty, the degree of uncertainty of the substance amount ratio $R_n$ can also be calculated.

In other words, the respective degree of uncertainty of the RMS coefficient, the substance amount of the standard substance, and the detection response ratio can be prepared by receiving degrees of uncertainty entered through the input screen displayed on the operation display unit 10. The controller 9 can calculate the degree of uncertainty of the quantitative value of the measurement target substance on the basis of the degree of uncertainty that is entered.

Meanwhile, the controller 9 can also calculate standard deviations as the variations of each of the respective peak areas of the standard substance and the measurement target substance. Therefore, the variations in response ratio $R_r$ can also be calculated. Furthermore, the variations of the RMS coefficient serving as a constant used for quantitative analysis can also be calculated.

Since the RMS coefficient with variations is used during daily quantitative analysis, the quantification results, such as concentration, can be indicated with variations. The system in the present embodiment can output the quantification results with variations according to the user's choice. The variations can be used as an integrated degree of uncertainty by certain reasoning. For example, this means that the HPLC system can append a degree of uncertainty of $\pm 0.98$ mg/L to a concentration value of 123.45 mg/L, which is a quantification result.

When determining the substance amount ratio $R_n$ using qNMR, there is an advantage in that a ratio is obtained. In other words, in the case of using a substance amount, a certain deviation occurs in the signal area of each of the standard substance and the measurement target substance due to various measurement factors. By calculating the substance amount ratio, it is possible to offset the factors that affect both the standard substance and the measurement target substance. The degree of uncertainty can also be reduced by calculating the substance amount ratio.

The same is true for the response ratio $R_r$. Although a certain amount of deviation occurs in both the respective measured peak areas of the standard substance and the measurement target substance, it is expected that the factors can be offset by calculating the response ratio. Therefore, the degree of uncertainty of the response ratio can be reduced. The advantage of the RMS method is that by calculating the ratio of Rn and Rr, i.e., the ratio between like items, it is possible to offset factors such as daily fluctuation factors, and variation factors arising from analytical systems/devices, reagents, laboratories, and users.

(Device function)

Ideally, the RMS coefficient is a constant unique to each of the measurement target and reference substances. The RMS coefficient is considered to be an intrinsic constant just like the molar absorption coefficient. However, in reality, the RMS coefficient has an associated uncertainty spread. In general, the uncertainty is understood to be a parameter similar to error, bias, variation, and overall precision. One of the factors that cause uncertainty is instrumental and individual differences in analyzers and analysis systems. For example, the actual RMS coefficient varies considerably from device to device. Therefore, some users want to correct the RMS coefficient by multiplying the intrinsic constant by the correction coefficient of each device. Alternatively, the RMS coefficient can be corrected using a device function such as a linear first-order equation with an intercept of b (y = ax + b). In other words, a corrected RMS coefficient can be obtained by correcting a given RMS coefficient with a specified device function, and the measurement target substance can be quantified on the basis of the corrected RMS coefficient. Specifically, the user can input and set a correction coefficient for each analyzer and perform quantitative analysis using the RMS coefficient corrected by multiplying a given RMS coefficient by the correction coefficient. Even in the case of using the device function, the quantification results are output using the corrected RMS coefficients. This correction method using the device function can also be used for a standard substance such as a certified reference material (CRM) or used to compensate for deviations in RMS coefficients caused by qNMR, etc.

(Others)

In the absolute calibration curve method employing RMS coefficients, the peak area of a standard material is externally measured every day or at appropriate times (occasionally). Such a standard substance can be selected from various viewpoints. For example, in the case of amino acid analysis, a component that elutes relatively early, such as aspartic acid, is used as a standard substance, and the peak area of the standard substance is obtained. That is, since aspartic acid is used as the standard substance, instead of phenylalanine that requires a relatively longer retention time, the chromatogram does not need to be measured until the final peak corresponding to arginine or histidine occurs. Even before the elution of arginine or histidine, the measurement can be terminated early, and the next cycle can be started, when the peak area of aspartic acid is obtained. That is, the analysis time for the entire period of one cycle is not required for the peak area measurement. Specifically, for example, even though the chromatogram is not measured until the entire cycle of 30 minutes ends, since the standard substance elutes within 5 to 10 minutes, it is possible to quickly switch to the next injection. At the time of quantitative calculation, the RMS coefficient of each component is multiplied by the reference peak area. In addition, it is assumed that RMS coefficients of isoleucine and leucine related to aspartic acid are given.

[List of Reference Numerals]

1: mobile phase
2: pump
3: autosampler
4: column
5: column oven
6: detector
7: data processing device
8: memory unit
9: controller
10: operation display unit
100: liquid chromatographic apparatus

Claims

1. A liquid chromatographic apparatus (100) quantifying a predetermined measurement target substance, the liquid chromatographic apparatus comprising a controller (9) and an operation display unit (10) configured to receive user operations and to perform display,

   characterized in that the operation display unit (10) receives a designation of a measurement target substance and a standard substance different from the measurement target substance, and

the controller (9) quantifies the measurement target substance based on a substance amount of the standard substance, a detection response ratio based on detection results of the measurement target substance and the standard substance, and an RMS coefficient, which is a ratio of a response ratio $R_r$ of the measurement target substance and the standard substance with respect to a substance amount ratio $R_n$ of the measurement target substance and the standard substance.

2. The liquid chromatographic apparatus (100) of claim 1, further comprising a memory unit (8) configured to store the RMS coefficients according to combinations of the measurement target substance and the standard substance,

wherein the operation display unit (10) receives designations of multiple types of substances and designations as to whether each of the substances is the measurement target substance or the standard substance, and the controller (9) quantifies the measurement target substance based on the RMS coefficient stored in the memory unit (8) according to the designation.

3. The liquid chromatographic apparatus (100) of claim 1, comprising a memory unit (8) configured to store conversion coefficients for converting quantification results that are based on the RMS coefficients, the substance amount of the standard substance, and the detection response ratio of the measurement target substance and the standard substance, into a certain unit of concentration to output,
wherein the operation display unit (10) receives a designation of the unit of concentration and outputs the quantification result in the designated unit of concentration.

4. The liquid chromatographic apparatus (100) of claim 1, wherein the operation display unit (10) receives inputs of values relating to the substance amounts of the measurement target substance and standard substances, and the controller (9) calculates the RMS coefficients based on the values of the substance amounts.

5. The liquid chromatographic apparatus (100) of claim 4, comprising a memory unit (8) that stores the RMS coefficient in correspondence with the measurement target substance and the reference substance that are used to calculate the respective RMS coefficient.

6. The liquid chromatographic apparatus (100) of claim 1, wherein the operation display unit (10) has a user interface for selecting whether the standard substance and the measurement target substance are to be individually measured or to be collectively measured.

7. The liquid chromatographic apparatus (100) of claim 1, comprising a detector (6) configured to perform detection according to absorbance, mass, or fluorescence,
wherein the detector (6) can be configured with different wavelengths, m/z, or excitation/fluorescence wavelengths, which are configurable variables for the detection, for the measurement target substance and the standard substance.

8. The liquid chromatographic apparatus (100) of claim 1, wherein the controller (9) calculates a degree of uncertainty of a quantitative value of the measurement target substance, based on a degree of uncertainty of the RMS coefficient, the substance amount of the standard substance, or the detection response ratio.

9. The liquid chromatographic apparatus (100) of claim 1, wherein the controller (9) obtains a corrected RMS coefficient by correcting a given RMS coefficient with a predetermined device function, and quantifies the measurement target substance based on the corrected RMS coefficient.

FIG. 1

RMS coefficient determination screen

measurement target substance [ Calbamazepine ] RMS coefficient [ 1.00000 ]          [ RMS coefficient calculation ]

standard substa ce [ Internal ]

┌─ qNMR (substance amount ratio) information ─────────────────────────────────┐

measurement target substance Calbamazepine   qNMR signal value [ 1.00000 ]    proton number [ 1 ]

standard substance Internal   qNMR signal value [ 1.00000 ]    proton number [ 1 ]

Rn [ 1.00000 ]

┌─ LC(response ratio) information ─────────────────────────────────┐

measurement target substance Calbamazepine      area ($A_{anal}$) [ 1 ]    ☐ automatic update

standard substance Internal      area ($A_{ref}$) [ 1 ]

Rr [ 1.00000 ]

┌─ substance information ─────────────────────────────────┐

measurement target substance Calbamazepine   molecular weight [ 1.00000 ]

standard substance Internal   molecular weight [ 1.00000 ]

coefficient for conversion to concentration unit      unit [          ]    coefficient [ 1.00000 ]

[ coefficient update ]                              [ cancel ]

# FIG. 2

| name of component | detector channel | RT(min) | allowable range (min) | calculation method | internal standard | |
|---|---|---|---|---|---|---|
| glycine | Detector Ch 1 | 1.000 | 10.000 | RMS | external ▼ | |
| phenylalanine | Detector Ch 1 | 2.000 | 10.000 | RMS ▼ | | |
| | | | | not quantified | | |
| | | | | absolute calibration curve method | | |
| | | | | correction % | | |
| < | | | | standard addition method | | > |
| | | | | manual | | |
| | | | | RMS | | |

component settings | calibration curve settings | concentration settings

RMS information

FIG. 3

| name of component | detector channel | RT(min) | allowable range (min) | calculation method | internal standard | |
|---|---|---|---|---|---|---|
| glycine | Detector Ch 1 | 1.000 | 10.000 | RMS | standard 1 ▼ | |
| phenylalanine | Detector Ch 1 | 2.000 | 10.000 | RMS ▼ | | |
| | | | | not quantified | | |
| | | | | absolute calibration curve method | | |
| | | | | correction % | | |
| < | | | | standard addition method | | > |
| | | | | manual | | |
| | | | | RMS | | |

**component settings** **calibration curve settings** **concentration settings**

RMS information

# FIG. 4

| component settings | calibration curve settings | concentration settings |

| name of component | detector channel | RT(min) | allowable range (min) | calculation method | internal standard | |
|---|---|---|---|---|---|---|
| glycine | Detector Ch 1 | 1.000 | 10.000 | RMS | standard 1 | |
| phenylalanine | Detector Ch 1 | 2.000 | 10.000 | RMS | | |
| | | | | | | |

< | | >

RMS information

RMS method / list of substances and coefficients

| name of target substance | name of internal substance | RMS coefficient |
|---|---|---|
| perillaldehyde | diphenylsulfone | 0.97903 |
| phenylalanine | glycine | 0.97287 |

add

delete

| edit | determination of RMS information | close |

FIG. 5

| component settings | calibration curve settings | concentration settings | | | | |
|---|---|---|---|---|---|---|
| name of component | detector channel | RT(min) | allowable range (min) | calculation method | internal standard | |
| glycine | Detector Ch 1 | 1.000 | 10.000 | RMS | standard 1 | |
| phenylalanine | Detector Ch 1 | 2.000 | 10.000 | RMS | standard 2 | |
| lycopene | Detector Ch 1 | 0.000 | 0.000 | RMS | | |
| | | | | | | |
| < | | | | | | > |

# FIG. 6

| name of component | detector channel | RT(min) | allowable range (min) | calculation method | |
|---|---|---|---|---|---|
| glycine | Detector Ch 1 | 1.000 | 10.000 | RMS | |
| phenylalanine | Detector Ch 1 | 2.000 | 10.000 | RMS | |
| lycopene | Detector Ch 1 | 0.000 | 0.000 | absolute calibration curve method | |
| | | | | | |
| | | | | | |

component settings | calibration curve settings | concentration settings

< | >

# FIG. 7

Europäisches
Patentamt

European
Patent Office

Office européen
des brevets

# EUROPEAN SEARCH REPORT

Application Number

EP 23 19 2131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MASUMOTO NAOKO ET AL: "Determination of perillaldehyde in perilla herbs using relative molar sensitivity to single-reference diphenyl sulfone", JOURNAL OF NATURAL MEDICINES, JAPANESE SOCIETY OF PHARMACOGNOSY, TOKYO, JP, vol. 73, no. 3, 23 April 2019 (2019-04-23), pages 566-576, XP037099047, ISSN: 1340-3443, DOI: 10.1007/S11418-019-01306-7 [retrieved on 2019-04-23] * abstract * * page 569, left-hand column, paragraph 1 - page 571, left-hand column, paragraph 1; figure 1 * * page 572, left-hand column, paragraph 2 - page 573, right-hand column, paragraph 1 * | 1-9 | INV. G01N30/86 |
| X | NISHIZAKI YUZO ET AL: "HPLC/PDA determination of carminic acid and 4-aminocarminic acid using relative molar sensitivities with respect to caffeine", FOOD ADDITIVES & CONTAMINANTS: PART A, vol. 35, no. 5, 22 February 2018 (2018-02-22), pages 838-847, XP093124302, * abstract * * page 840, right-hand column, paragraph 1 * * page 841, left-hand column, paragraph 1 - page 842, left-hand column, paragraph 2 * | 1-6 | TECHNICAL FIELDS SEARCHED (IPC) G01N |

-/--

The present search report has been drawn up for all claims

| Place of search | Date of completion of the search | Examiner |
|---|---|---|
| Munich | 26 January 2024 | Meltaus, Johanna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 23 19 2131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NISHIZAKI YUZO ET AL: "Relative molar sensitivities of carnosol and carnosic acid with respect to diphenylamine allow accurate quantification of antioxidants in rosemary extract", FOOD ADDITIVES & CONTAMINANTS: PART A, vol. 36, no. 2, 22 January 2019 (2019-01-22), pages 203-211, XP093124306, * abstract * * page 206, left-hand column, last paragraph - page 209, right-hand column, paragraph 1 * | 1-6 | |
| A | US 2010/100335 A1 (MIYAGAWA HARUHIKO [JP]) 22 April 2010 (2010-04-22) * abstract * * paragraphs [0038] - [0060] * | 1-9 | |
| | | | TECHNICAL FIELDS SEARCHED (IPC) |

The present search report has been drawn up for all claims

| Place of search | Date of completion of the search | Examiner |
|---|---|---|
| Munich | 26 January 2024 | Meltaus, Johanna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 2131

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2024

| Patent document cited in search report | Publication date | Patent family member(s) | Publication date |
|---|---|---|---|
| US 2010100335 A1 | 22-04-2010 | CN 101529239 A | 09-09-2009 |
| | | JP 4835694 B2 | 14-12-2011 |
| | | JP WO2008053530 A1 | 25-02-2010 |
| | | US 2010100335 A1 | 22-04-2010 |
| | | WO 2008053530 A1 | 08-05-2008 |

EPO FORM P0459

For more details about this annex : see Official Journal of the European Patent Office, No. 12/82

**REFERENCES CITED IN THE DESCRIPTION**

**Patent documents cited in the description**

- JP 6152301 B